# EUROPEAN PATENT SPECIFICATION

(11) **EP 1 428 564 B1**
(45) Date of publication and mention of the grant of the patent: **26.05.2010**
(21) Application number: 03396103.8
(22) Date of filing: 14.11.2003
(51) Int. Cl.: B01F 5/20, C02F 1/74, C02F 3/06, C02F 3/22

(54) **Method for washing a biofilter**
Verfahren zur Reinigung eines Biofilters
Procédé de nettoyage d'un biofiltre

(30) Priority: 12.12.2002 FI 20020498 U
(43) Date of publication of application: 16.06.2004
(60) Divisional application: 09174006.8
(73) Proprietor: Preseco Oy, 02150 Espoo (FI)
(72) Inventor: Lahtinen, Heikki, 00650 Helsinki (FI)
(74) Representative: Hjelt, Pia Dorrit Helene

(56) References cited:
- EP-A- 0 259 000
- EP-A- 0 730 895
- DE-C- 10 032 782
- US-A- 4 460 467
- US-A- 4 547 286
- US-A- 6 093 329

## Description

### Technical background

The object of the invention is a method for washing a biofiler contained in a container.

In water treatment, as for example, the treatment of drinking water and wastewaters, a wide range of different apparatus are used for the improvement of water quality. For example, efforts are made to remove harmful compounds from water or to change its pH value, in order to improve its qualities. Apparatus are also used for the improvement of the appearance of water, e.g. to improve its taste, odor and appearance qualities.

In the treatment of drinking water it is often important to reduce the amount of manganese and iron contained by water. These cause both technical problems in the water transfer apparatus and also taste and odor nuisance and sometimes even health hazards in the drinking water itself. It is sometimes also necessary to remove or convert organic compounds contained by drinking water, which may cause odor or taste nuisance. In some cases it also is necessary to remove compounds and microorganisms contained by water that are harmful for health. For example, chemical precipitation and mechanical filtration are used to remove these compounds from water. Oxidation of water, either chemically or mechanically, is also used, to allow precipitation of e.g. iron and manganese from water. Often these methods are, however, technically complicated and also expensive and susceptible to incident. In addition, the facilities are expensive to operate, due to the use of chemicals and the power demand of blowers and compressors necessary for aeration and washing of filters, as well as the consumption of wash waters.

European patent application EP 0 730 895 discloses a filter device comprising in the centre a double-walled tube. Air is injected into the space between both tubes and conducted below the filter. According to EP 0 730 895 column 4, lines 39-42, a quantity of air is supplied into the space between both tubes of the double-walled tube, this air will flow upward into the inner tube at the bottom via slits, carrying with it the granulated material from filter bed.

US Patent 4,547,286 shows a water treatment apparatus comprising a buoyant filter and a vertical feeder pipe on which are mounted perforated delivery tubes. Column 6, lines 6 to 9 states that the cleaning is accomplished by periodically dispersing gas bubbles through out liquid in the filter bed.

European patent application EP 259 000 discloses a filtering apparatus having a filter medium made of fibers. Further it comprises a piston rod extension having several apertures. The piston is connected to backwash fluid supply and to a supply of air or gas. In column 5, lines 20 to 36, is described the cleaning of the filter which is achieved by turning off the flow to the fluid to the inlet and then operating the pneumatic or hydraulic piston and cylinder arrangement to cause the piston to rise thereby enlarging the space in which the carbon mass is located. This will cause the fibers to separate from one another and while this takes place, clean backwash fluid is passed in through the backwash feed pipe.

US Patent 4,460,467 describes a water purification device comprising a granular filter medium, a scrubbing air injection pipe and a counter current washing pipe. In column 3, lines 26 to 52, is presented how the countercurrent washing of the granular filter medium is performed. The washing in the US Patent 4,460,467 is performed by alternating between washing with water and washing with air.

Traditionally, for example in the treatment of drinking water, aeration nozzles are used for aeration, conducting excess-pressure air through the nozzles in the water, in order to divide the air into bubbles. From the bubbles oxygen is diffused in water and thus occurs oxidation of compounds contained by water. Instead of air, also oxygen can be used for aeration, either as pure oxygen or partly mixed with air. In these apparatuses the so-called oxidation capacity is often dependent on the amount of available air/oxygen, thus making it often necessary to feed great amounts of air in the water to achieve a satisfactory oxidation result. The use of great amounts of air requires big and expensive apparatus.

Filtration is based principally on physical and chemical reactions between filtering grains and the filtered substance. For example, sand, plastic filling materials and ceramic bodies can be used as filtering material.

By means of filters it is possible to treat even great amounts of water, for example in the removal of iron and manganese. The filter can be e.g. a slow filter, where the filtration rate of water is in the range of 0.1 - 0.5 m/h. A significant part of the purification in slow filters is based on biological activity taking place on the surface of the filter. In rapid filters the filtration rate is essentially higher than in slow filtering. The filtration rate can be, for example, 2 - 50 m/h. Biological activity does not have so great importance in a rapid filter as in slow filtering.

Also, in view of the functioning of the apparatus, it is essential how efficiently the apparatus can be cleaned. Precipitate accumulated in the filters reduces filter output by increasing relative speed of water. Also the contact of filtering material and water decreases, which also diminishes filter output. Consequently, by intensifying the washing and simultaneously accelerating it, we can effectively improve the economy and output of the operation. Filter cleaning can be done by water or by air or by their combination. During the cleaning period the apparatus is out of use, and also wastewaters are formed in it, which must be conducted among wastewaters.

### Description of the invention

Features that are characteristic of the method are presented in the claim 1.

An ejector can be attached to the container, into which ejector gas and water can be conducted, like preferably air and water, and from which ejector the gas-water mixture can be conducted by a connection device essentially below the water treatment unit, for washing the water treatment unit and/or container.

In the method according to the invention, the gas-water mixture can be put in an especially strong movement in a connection device, like a pipe or hose, before it gets to the space below the water treatment unit. Also the water below the bio-filter is made to flow, because of the force directed at it, effectively upwards into the bio-filter. As the pressure decreases, more gas is released as micro-bubbles from the water of the upwards flowing gas-water mixture, which further accelerates the water flow and, at the same time, intensifies washing of the bio-filter.

Corresponding increase of washing output can, within the framework of the invention, be used also in other kinds of applications, without restricting in any way the scope of protection of the invention. The water treatment unit is a bio-filter. .

The ejector can be preferably installed essentially in the upper part of the container and linked to the lower part of the container by a connection device, so that from the ejector the gas-water mixture can be conducted by means of the connection device to the lower part of the container, in order to intensify the washing of the water treatment unit and/or the container. The upwards flowing water and gas bubbles effectively mix e.g. the bio-filter mass and they also efficiently transport dirt material to the discharge unit, such as an overflow groove and discharge connection. This solution also provides the advantage that the connection device is as long as possible, whereupon the acceleration distance of the gas-water mixture is preferably long.

According to one preferable object of the invention, a bio-filter has been attached to the container of the water treatment apparatus, and an ejector has been installed above the upper surface (8u) of the bio-filter (8), and the gas-water mixture can be conducted from the ejector below the lower surface of the bio-filter, through a connection device installed in the bio-filter, for washing the bio-filter.

A vacuum connection may be attached to the container for removing gas. An under-pressure is created in the vacuum connection by means of a vacuum device. This has special advantage, because this way the stinking and harmful gases formed during washing, can be effectively collected and conducted out of the water treatment apparatus. Gases formed in washing can smell very bad and they can even contain substances that are dangerous to health. By means of an under-pressure, the pressure of the container can be decreased, whereupon gas can be more effectively released from the gas-water mixture. This also, in turn, improves the washing output of the apparatus, because the flowing of the mixture is intensified and the washing event itself is also intensified because of the gas released into homogeneous micro-bubbles.

The water-air mixture can be conducted from the ejector below the bio-filter also through a connecting device attached outside the container. Preferably, water-air mixture can be conducted from the ejector below the bio-filter through a connecting device installed inside the bio-filter.

The uptake of wash water by well-known techniques, for example, in rapid sand filters, is e.g. 5 - 8 % of the amount of treated water. In continuous-washing filters the uptake of wash water can be even 15 - 20% of the amount of the treated water. By means of the now invented washing technique, the uptake of wash water can be about 1 - 2% of the amount of the treated water. This technical implementation has an essential impact on the total costs of the treatment and on the total output of the apparatus.

In a water treatment apparatus where water filtration rate is e.g. 8 - 15 m/h, it is possible to achieve a good wash result by the apparatus defined by the invention, typically by a 10 - 15 minute washing time. In this case the corresponding wash water uptake is 10 - 20 m³.

The attached filter can preferably be a rapid filter or it can also be e.g. a slow filter. The filter can be one-layered or multi-layered.

In the filter attached to the container and/or in a separate container attached to the container, counter-current rinsing may be used for cleaning. Other cleaning methods can also be used. Cleaning can be enhanced by conducting into the filter element e.g. air mixed with water, so-called dispersion water and air mixture.

An ejector may be installed in the container of the water treatment apparatus, where air and water are conducted, and which air-water mixture can be conducted into the container for oxidation of water and/or washing of the treatment unit attached to the container. In this kind of ejector, the pressure is 3 - 6 bar. In the ejector the air-water mixture can be put in a very strong movement, which enhances oxidation of water and intensifies washing.

The water treatment apparatus can be used in a wide range of targets. Accordingly, it is suitable for purification of drinking water or posttreatment of wastewaters. The size of the apparatus is freely variable and its capacity can be freely designed, according to each target. For example, in the treatment of drinking water, the container volume can be 0.5 - 100 m3. The apparatus is excellent for removing e.g. iron and manganese from tap water. Concurrently, also other water properties improve, because e.g. potential volatile acids exit from water during the treatment, whereupon the pH value of water rises on its part. It is also extremely easy to maintain, because there are no parts in the apparatus that wear out. Other benefits of the water treatment apparatus include small energy consumption. The apparatus has no need for separate aeration compressors and neither for washing air compressors. Depending on its application, it is also totally free from chemicals, so that its operating costs are essentially smaller compared with traditional processes.

In the following section one application of the invention will be described in detail, by referring to the attached drawings.

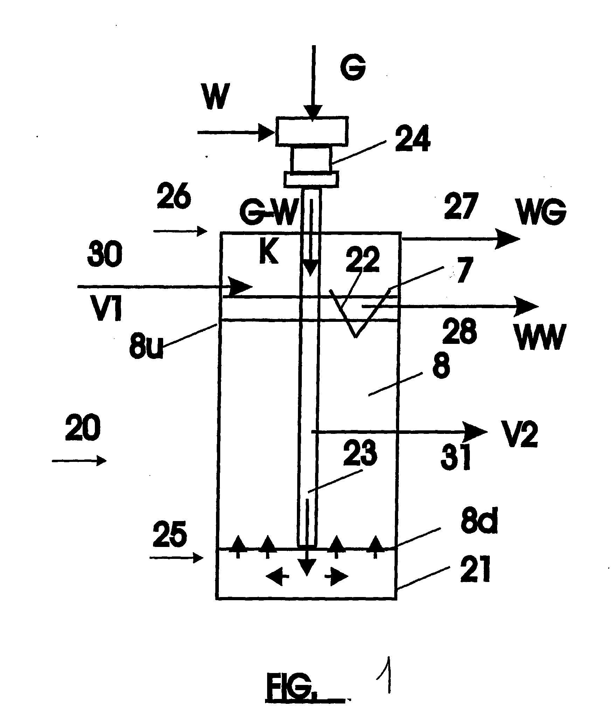

Figure 1 presents a water treatment apparatus, which has a bio-filter as the water treatment unit.

In the apparatus 20 there is a container 21, in which has been installed a bio-filter 8. In the bio-filter 8 has been installed an ejector 24 in the upper part 26 of the container, and to it has been linked a connection pipe 23, which has been installed in the center of the bio-filter 8. The gas-water mixture G-W that forms in the ejector 24 from gas G and water W conducted into it, can be conducted by means of the connection pipe 23 essentially below the lower surface 8d of the bio-filter 8 in the lower part 25 of the container, for the purpose of washing the bio-filter 8.

In the washing phase of the bio-filter 8, the gas-water mixture G-W is carried in a countercurrent through the bio-filter 8, on top of the upper surface 8u of the bio-filter. The created washing wastewater WW is removed from the container 21 through an overflow groove 22 and a discharge connection 28. The formed waste gas WG is removed from the container 21 through a vacuum connection 27.

In the operating phase of the bio-filter 8, water V1 is conducted through the supply connection 30 on top of the upper surface 8u of the bio-filter 8, from where it goes through the bio-filter 8 below its lower surface 8d into the lower part 25 of the container. The treated water V2 is removed from the lower part 25 of the container through the connection pipe 23 and the discharge connection 31 of the ejector 24 from the container 21.

## Claims

1. Method for washing a bio-filter contained in a container
**characterized in that** the method comprises the steps of
a) forming a gas-water mixture in an ejector at the pressure of 3-6 bar
b) conducting the gas-water mixture below the lower surface of the bio-filter in the lower part of the container containing the bio-filter, and
c) carrying the gas-water mixture through the biofilter, wherein the pressure decreases and gas is released as micro-bubbles from the water of the upwards flowing gas-water mixture.

2. A method according to claim 1, further comprising placing the ejector above the upper surface of the bio-filter.

## Patentansprüche

1. Verfahren zum Reinigen eines in einem Behälter befindlichen Biofilters, **dadurch gekennzeichnet, dass** das Verfahren die Schritte umfasst
a) Bilden einer Gas-Wasser-Mischung in einem Ejektor bei einem Druck von 3-6 bar,
b) Leiten der Gas-Wasser-Mischung unter die untere Oberfläche des Biofilters in dem unteren Teil des Behälters, der den Biofilter umfasst, und
c) Führen der Gas-Wasser-Mischung durch den Biofilter, wobei der Druck abfällt und Gas freigesetzt wird als Mikroblasen aus dem Wasser der aufwärtsströmenden Gas-Wasser-Mischung.

2. Verfahren nach Anspruch 1, ferner umfassend Anordnen des Ejektors über der oberen Oberfläche des Biofilters.

## Revendications

1. Procédé de nettoyage d'un biofiltre contenu dans un récipient, **caractérisé en ce que** le procédé comprend les étapes consistant à :
a) former un mélange eau-gaz dans un éjecteur à la pression de 3 à 6 bars,
b) conduire le mélange eau-gaz en dessous de la surface inférieure du biofiltre dans la partie inférieure du récipient contenant le biofiltre, et
c) transporter le mélange eau-gaz à travers le biofiltre, étape dans laquelle la pression diminue et du gaz est libéré sous forme de micro-bulles depuis l'eau du mélange eau-gaz s'écoulant vers le haut.

2. Procédé selon la revendication 1, comprenant en outre l'étape consistant à placer l'éjecteur au-dessus de la surface supérieure du biofiltre.
